# EUROPEAN PATENT SPECIFICATION

(11) **EP 3 821 524 B1**
(45) Date of publication and mention of the grant of the patent: **08.11.2023**
(21) Application number: 18765505.5
(22) Date of filing: 09.07.2018
(51) Int. Cl.: H02M 7/00, H02M 1/34

(54) **SYSTEM FOR CONVERTING DIRECT CURRENT ELECTRIC ENERGY INTO ALTERNATE CURRENT ELECTRIC ENERGY**
SYSTEM ZUR UMWANDLUNG VON GLEICHSTROM IN WECHSELSTROM
SYSTÈME DE CONVERSION D'ÉNERGIE ÉLECTRIQUE À COURANT CONTINU EN ÉNERGIE ÉLECTRIQUE À COURANT ALTERNATIF

(43) Date of publication of application: 19.05.2021
(73) Proprietor: Mavel edt S.p.A., 11026 Pont Saint Martin (AO) (IT)
(72) Inventor: FRANCESETTI, Marco, 11026 Pont Saint Martin (AO) (IT); BETTONI, Davide, 11026 Pont Saint Martin (AO) (IT); BORELLO, Fabio, 11026 Pont Saint Martin (AO) (IT)
(74) Representative: Garavelli, Paolo
(86) International application number: PCT/IT2018/000096
(87) International publication number: WO 2020/012511

(56) References cited:
- JP-A- S5 965 402
- JP-A- 2006 060 986
- US-A- 5 734 314
- US-A- 6 060 795
- CHI KWAN LEE ET AL: "Hardware and Control Implementation of Electric Springs for Stabilizing Future Smart Grid With Intermittent Renewable Energy Sources", IEEE JOURNAL OF EMERGING AND SELECTED TOPICS IN POWER ELECTRONICS, IEEE, PISCATAWAY, NJ, USA, vol. 1, no. 1, 1 March 2013 (2013-03-01), pages 18-27, XP011520965, ISSN: 2168-6777, DOI: 10.1109/JESTPE.2013.2264091

## Description

The present invention refers to a system for converting direct current electric energy into alternate current electric energy, in particular for using high-frequency alternate current electric energy with synchronous reluctance electric machines.

More in particular, the invention refers to an inverter connected to synchronous reluctance motors, configured for reducing the switching losses.

In order to drive electric machines, in particular permanent magnet electric machines, it is necessary to convert the direct current electric energy, coming from electric energy accumulating systems (for example batteries), into three-phase alternate current electric energy through a DC / AC converter (inverter). Such conversion is performed by a DC / AC converter (inverter), which comprises three switching branches and must supply to the electric machine three sinusoidal voltages, mutually offset by 120°.

So-called "soft switching" inverters are known, comprising a circuit with a coil, which modulates the current variation, and a capacitor which modulates the voltage variation. Moreover, in order to guarantee the circuit operation, and therefore a zero energy balance, a resistor is added to the circuit between the voltage of the used energy source and a capacitive circuit. This resistance allows guaranteeing the circuit operation and reducing the voltage on the terminal of the capacitive circuit. Such DC / AC converter is disclosed in patent application WO-A-11116854. Furthermore, non-patent literature "Hardware and Control Implementation of Electric Springs for Stabilizing Future Smart Grid With Intermittent Renewable Energy Sources" by Chi Kwan Lee et.al. (XP011520965), IEEE Journal of Emerging and Selected Topics in Power Electronics, 2013-03-01, discloses a single-phase half-bridge power inverter comprising an Undeland snubber circuit.

These known DC / AC converters have the problem of dissipating energy in the resistor, with a consequent decrease of the converter efficiency.

This problem is solved by a DC / AC converter, disclosed in patent application WO-A-2017/071947 of the same Applicant, comprising a circuit for modulating the voltage and intensity variations (to perform a soft switching) and a module for recovering electric energy. The circuit for modulating the voltage and current variations allows reducing the losses and limiting the voltage and current overloads on the switch. The module for recovering electric energy allows replacing the resistance of the modulating circuit, in order to reduce the energy losses.

Object of the present invention is finding an alternative and less costly solution to the problem solved by the converter disclosed in patent application WO-A-2017/071947, providing a system for converting direct current electric energy into alternate current electric energy, which allows replacing the resistance of the modulating circuit, without using the module for recovering electric energy disclosed in patent application WO-A-2017/071947, but using an element for recovering electric energy, to reduce the losses and limit the voltage and current overloads on the switch, with a simpler and less costly solution.

The above and other objects and advantages of the invention, as will appear from the following description, are obtained with a system for converting electric energy as claimed in the related independent claim.

The invention is defined by the independent claim.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

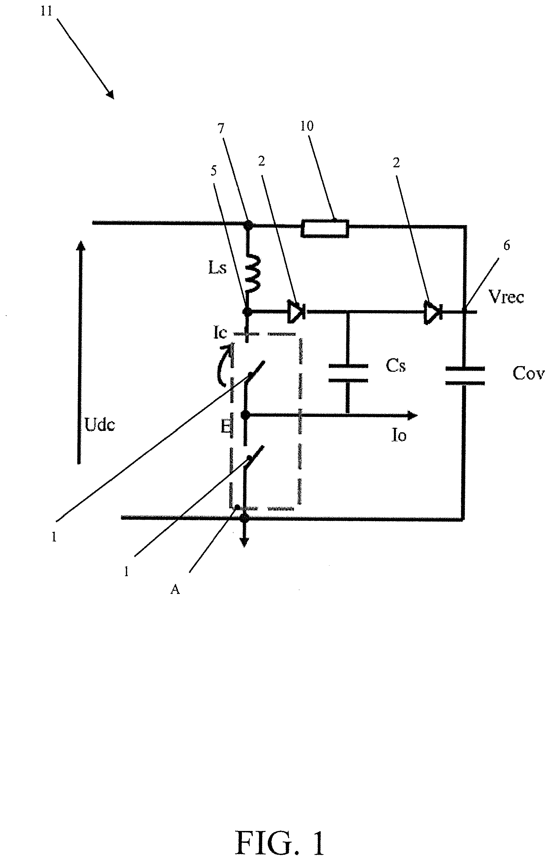

- Figure 1 shows a diagram of a modulating circuit of the system for converting electric energy according to the invention; and
- Figure 2 shows a front view of an element for recovering electric energy of the system for converting electric energy according to the invention.

With reference to the Figures, a system is described for converting direct current electric energy into alternate current electric energy according to the invention, or DC/AC converter (inverter), comprises three switching branches and a modulating circuit 11 of voltage and current intensity comprising a capacitor Cs for the alternate current output phase of said system, and a coil Ls. Said system further comprises an element 10 for recovering electric energy connected to said switching branches and to said modulating circuit 11.

Advantageously, the converting system according to the invention can be bidirectional (reversible) and allow converting an alternate current, for example three-phase, electric energy, into direct electric energy; the converting system according to the invention comprises at least two switching branches and allows converting an alternate current electric energy, for example with two, three, five or more phases, into direct electric energy.

In particular, an embodiment of the converting system of the invention will now be described, comprising three switching branches, a direct input phase and three alternate output phases; each switching branch A comprises for example two controlled switches 1 and two diodes 2. The diodes 2 are connected in parallel with the switches 1 and allow passing the current Ic along a direction. In a known way, the control of the switches 1 allows generating an alternate voltage. The alternate current output phases Io of the converting system are connected to the central node E of each switching branch, namely the node E between the two switches 1.

For example, the switches can be MOSFET ("Metal Oxide Semiconductor Field Effect Transistor") switches and/or IGBT ("Insulated Gate Bipolar Transistor") switches.

Preferably, the switches are controlled in a known way through Pulse Width Modulation, PWM.

The converting system of the invention further comprises a modulating circuit 11 of voltage and current intensity which allows a soft switching to limit the switching losses, and the voltage and current overloads on the switches.

In a known way, the modulating circuit 11 comprises for every phase the coil Ls, which modulates the current variation, and the capacitor Cs to modulate the voltage variation.

According to an embodiment of the invention, the modulating circuit 11 comprises the coil Ls which connects a direct input phase Udc of the converting system with the switching branch A. Moreover, the converting system comprises a capacitor Cs per phase (therefore, three capacitors Cs, one for each of the three switching branches) which connects the alternate output phase Io with the node between the coil Ls of the modulating circuit and the modulating branches. The converting system of the invention further comprises the element 10 for recovering electric energy, which will be described below in detail, connected to the switching branch A and to the modulating circuit 11.

According to an example embodiment, the modulating circuit 11 of the converting system of the invention comprises the coil Ls which connects the direct input phase Udc of the switching system with the switching branch A. The modulating circuit 11 comprises a branch comprising two diodes 2, and is included between a node 5, for connection of the coil Ls with the switching branch A, and a node 6, for connection between the element 10 for recovering electric energy and a capacitor Cov.

The other end of the element 10 for recovering electric energy is connected to the direct input phase Udc of the converting system, is preferably connected to a connection node 7 of the coil Ls with the direct input phase Udc, and the other end of the capacitor Cs is connected to the alternate output phase Io of the switching branch A. The other end of the capacitor Cov is connected to mass. The capacity Cs allows modulating the evolution of the voltage on the terminal of the switch 1.

This capacity Cs stores part of the energy due to the soft switching of the switches 1. The other part of this energy is stored in a capacity Cov with greater value. Therefore, the energy stored in the capacitor circuit is returned to the accumulating system being used (battery) through the resistor. The coil Ls allows modulating the evolution of the current at the terminal of the switch 1. In fact, the energy created by the coil Ls has not been completely stored in the capacitor Cs, so that it is necessary to insert the second capacity Cov whose value is greater than Cs. The element 10 for recovering electric energy guarantees the system operations and allows reducing the voltage Vrec of the modulating circuit 11.

Moreover, in order to make the three switching branches of the converting system of the invention, this scheme can be repeated three times (once for every switching branch A).

In a preferred way, the three switching branches are arranged in parallel, between the two direct input phases Udc of the converting system, and each switching branch is connected to a phase of an electric machine.

The element 10 for recovering electric energy allows recovering the energy available or created during the so-called soft switching, and sending it to means for storing electric energy (for example a battery) connected to the direct phase Udc of the converting system. Therefore, the electric losses due to switching inside the switching system of the invention are strongly reduced by the electric energy recovering element 10.

In order to reduce these losses in the switching system of the invention, the electric energy recovering element 10 is made with a conducting bar 10 ("bus bar"), made of an electrically conducting material, comprising at least one through-notch 15, 16, for making a resonant conducting bar 10 configured for recovering the energy available or created during the soft switching of the modulating circuit 11.

Preferably, the conducting bar 10 comprises at least one part shaped as a serpentine and comprises a first through-notch 15 and a second through-notch 16, configured for making the serpentine shape of the conducting bar 10; in a preferred way, said first through-notch 15 comprises sections which are substantially parallel to sections of the second through-notch 16.

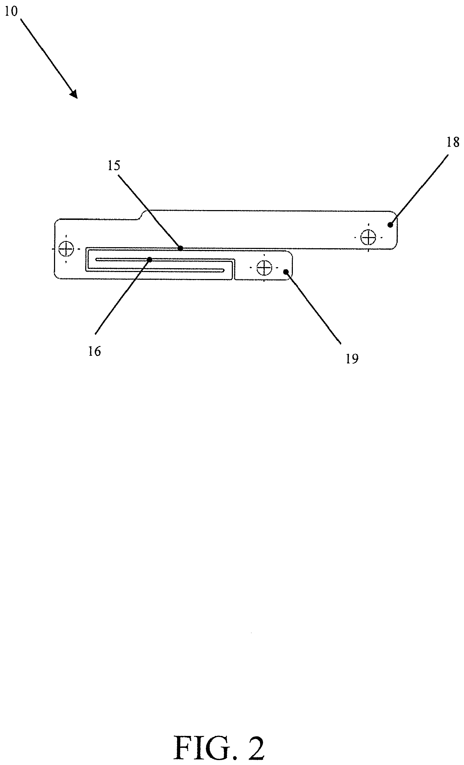

In the example shown in Figure 2, the conducting bar 10 comprises a first through-notch 15 and a second through-notch 16, each formed of successive, substantially rectilinear sections, preferably two successive sections being arranged in order to mutually form straight angles.

According to the invention, through-notches 15, 16 each comprise longitudinal sections connected by transverse sections, the longitudinal sections having a greater length than that of the transverse sections.

The conducting bar 10 comprises two terminals 18, 19 made at the two ends of the part of conducting bar 10 shaped as a serpentine, a terminal being connected to the switching branch A and the other terminal being connected to the modulating circuit 11 of the converting system; in a preferred way, one of the two terminals 18, 19, is connected to the capacitor Cov, which stores part of the energy due to the soft switching of the switches 1, and the other one is connected to the direct input phase Udc of the converting system of the invention; for example, one of the two terminals 18, 19 is connected to the node 6 of the circuit branch which comprises the two diodes 2, and the other one is connected to the connection node 7 of the coil Ls with the direct input phase Udc of the converting system.

The converting system of the invention allows actuating electric machines, in particular electric machines operating at very high speeds with a high efficiency of the inverter (converter).

The converting system of the invention can provided for use on a vehicle, in particular inside it, in particular a terrestrial, aeronautical or naval vehicle.

The converting system of the invention can also be used in electric generating systems not used on board the vehicles, such as turbines, micro-turbines or wind turbines.

Moreover, the present invention deals with a motor system comprising at least one means for storing electric energy, for example a battery, and an alternate current electric machine, for example an electric machine with permanent magnets. The motor system comprises a converting system according to one of the above described embodiments, to convert the direct electric energy of said means for storing electric energy, into alternate current electric energy for said electric machine and possibly vice versa.

Advantageously, due to the converting system of the invention, the electric machine can be driven by limiting the electric losses. Moreover, if the converting system is bidirectional (reversible), it is also possible to store (for example in a battery) the electric energy generated by the rotation of the electric machine.

## Claims

1. System for converting direct current electric energy into alternate current electric energy comprising a switching branch (A) and a modulating circuit of voltage and current intensity which comprises a snubber circuit having a capacitor(Cs) for an alternate current output phase of said system, and a coil (Ls), wherein the snubber circuit further comprises an element (10)for recovering electric energy that is connected to said switching branch (A), said element (10)for recovering electric energy being made with a conducting bar made of electrically conducting material configured for recovering the energy available or created during the soft switching of the switching branch (A), and allows sending recovered energy to storage means, for example a battery, **characterized in that** the conducting bar is a resonant conducting bar comprising a part shaped as a serpentine, a first through-notch (15) and a second through-notch (16),the first through-notch (15) and the second through-notch (16) being formed each of successive, rectilinear sections comprising longitudinal sections connected by transverse sections, the longitudinal sections having a greater length than that of the transverse sections.

2. System for converting electric energy according to claim 1, **characterized in that** said first through-notch (15) comprises sections which are substantially parallel to sections of the second through-notch (16).

3. System for converting electric energy according to any one of the previous claims, **characterized in that** the switching branch (A) comprises two switches (1) controlled to generate an alternate voltage, and **in that** the resonant conducting bar (10) is connected to a capacitor (Cov) adapted to store part of the energy due to a switching of the switches (1), and to a direct input phase (Udc) of the system.

4. System for converting electric energy according to claim 3, **characterized in that** the resonant conducting bar (10) is connected to a node (6) of a branch of modulating circuit (11) which comprises two diodes (2) connected in parallel with the switches (1), and the other one is connected to a connection node (7) of the coil (Ls) with the direct input phase (Udc) of the converting system.

5. System for converting electric energy according to any one of the previous claims, **characterized in that** the resonant conducting bar (10) comprises two terminals (18, 19) made at the two ends of the part of conducting bar (10) shaped as a serpentine, for the connection to the switching branch (A) and to the modulating circuit (11) .

6. System for converting electric energy according to any one of the previous claims, **characterized in** than the converting system is bidirectional, allowing the conversion or an alternate current electric energy into direct electric energy.

7. Motor system comprising means for storing electric energy and an alternate current electric machine, **characterized in that** it comprises a system for converting electric energy according to any one of the previous claims 1 to 6, to convert the direct electric energy of said means for storing electric energy, into alternate current electric energy ror said electric machine.

## Patentansprüche

1. System zur Umwandlung elektrischer Gleichstromenergie in elektrische Wechselstromenergie, umfassend einen Schaltzweig (A) und eine Spannungs- und Stromintensitätsmodulationsschaltung, die eine Dämpferschaltung mit einem Kondensator (Cs) für eine Wechselstrom-Ausgangsphase des Systems umfasst, und eine Spule (Ls), in der der Dämpferkreis außerdem ein Element zur Rückgewinnung elektrischer Energie (10) umfasst, das mit dem Schaltzweig (A) verbunden ist, wobei die Rückgewinnung elektrischer Energie mit einem Leiterstab aus elektrisch leitendem Material erfolgt, der zur Rückgewinnung konfiguriert ist die während des sanften Schaltens des Schaltzweigs (A) verfügbare oder erzeugte Energie und ermöglicht das Senden der zurückgewonnenen Energie an Speichermittel, beispielsweise eine Batterie, **dadurch gekennzeichnet, dass** der leitende Stab (10) ein resonanter leitender Stab ist und umfasst ein serpentinenförmiges Teil, eine erste Durchgangskerbe (15) und eine zweite Durchgangskerbe (16), wobei die erste Durchgangskerbe (15) und die zweite Durchgangskerbe (16) jeweils aus aufeinanderfolgenden geraden Abschnitten gebildet sind, die Längsabschnitte umfassen, die durch Querabschnitte verbunden sind Abschnitte, wobei die Längsabschnitte eine größere Länge aufweisen als die Querabschnitte.

2. System zur Umwandlung elektrischer Energie nach Anspruch 1, **dadurch gekennzeichnet, dass** die erste Durchgangskerbe (15) Abschnitte umfasst, die im Wesentlichen parallel zu Abschnitten der zweiten Durchgangskerbe (16) sind.

3. System zur Umwandlung elektrischer Energie nach einem der vorhergehenden Ansprüche, **dadurch gekennzeichnet, dass** der Schaltzweig (A) zwei zur Erzeugung einer Wechselspannung gesteuerte Schalter (1) umfasst und dass die Stromschiene (10) daran angeschlossen ist an einen Kondensator (Cov), der in der Lage ist, einen Teil der Energie aufgrund der Kommutierung der Schalter (1) zu speichern, und an eine kontinuierliche Eingangsphase (Udc) des Systems.

4. System zur Umwandlung elektrischer Energie nach Anspruch 3, **dadurch gekennzeichnet, dass** die Leiterschiene (10) mit einem Knoten (6) eines Modulationsschaltungszweigs (11) verbunden ist, der zwei parallel zu den Schaltern geschaltete Dioden (2) umfasst (1) und der andere ist mit einem Knoten (7) verbunden, der die Spule (Ls) mit der kontinuierlichen Eingangsphase (Udc) des Umwandlungssystems verbindet.

5. System zur Umwandlung elektrischer Energie nach einem der vorhergehenden Ansprüche, **dadurch gekennzeichnet, dass** der Leiterstab (10) zwei Anschlüsse (18, 19) aufweist, die an den beiden Enden des spulenförmigen Leiterstabteils (10) angebracht sind, zum Anschluss an den Schaltzweig (A) und an die Modulationsschaltung (11).

6. System zur Umwandlung elektrischer Energie nach einem der vorhergehenden Ansprüche, **dadurch gekennzeichnet, dass** das Umwandlungssystem bidirektional ist und die Umwandlung einer elektrischen Wechselstromenergie in elektrische Gleichenergie ermöglicht.

7. Motorsystem, das Mittel zum Speichern elektrischer Energie und eine elektrische Wechselstrommaschine umfasst, **dadurch gekennzeichnet, dass** es ein System zum Umwandeln elektrischer Energie nach einem der vorhergehenden Ansprüche 1 bis 6 zum Umwandeln der direkten elektrischen Energie des Mittels zum Speichern umfasst elektrische Energie in elektrische Wechselstromenergie für die elektrische Maschine umwandeln.

## Revendications

1. Système de conversion d'énergie électrique en courant continu en énergie électrique en courant alternatif comprenant une branche de commutation (A) et un circuit de modulation d'intensité de tension et de courant comprenant un circuit amortisseur comportant un condensateur (Cs) pour une phase de sortie en courant alternatif dudit système, et une bobine (Ls), dans laquelle le circuit amortisseur comprend également un élément de récupération d'énergie électrique (10) relié à ladite branche de commutation (A), ladite récupération d'énergie électrique étant réalisée avec une barre conductrice en matériau électriquement conducteur, configurée pour récupérer l'énergie disponible ou créée lors de la commutation douce de la branche de commutation (A), et permet d'envoyer l'énergie récupérée vers des moyens de stockage, par exemple une batterie, **caractérisé en ce que** le barreau conducteur (10) est un barreau conducteur résonant et comprenant une pièce en forme de serpentin, une première encoche traversante (15) et une seconde encoche traversante (16), la première encoche traversante (15) et la seconde encoche traversante (16) étant formées chacune de tronçons rectilignes successifs comprenant des tronçons longitudinaux reliés par des sections, les sections longitudinales ayant une plus grande longueur que les sections transversales.

2. Système de conversion d'énergie électrique selon la revendication 1, **caractérisé en ce que** ladite première encoche traversante (15) comporte des portions qui sont sensiblement parallèles à des portions de la seconde encoche traversante (16).

3. Système de conversion d'énergie électrique selon l'une quelconque des revendications précédentes, **caractérisé en ce que** la branche de commutation (A) comporte deux interrupteurs (1) commandés pour générer une tension alternative, et **en ce que** la barre conductrice (10) lui est reliée à un condensateur (Cov) apte à stocker une partie de l'énergie due à la commutation des interrupteurs (1), et à une phase continue d'entrée (Udc) du système.

4. Système de conversion d'énergie électrique selon la revendication 3, **caractérisé en ce que** la barre conductrice (10) est connectée à un noeud (6) d'une branche de circuit de modulation (11) qui comprend deux diodes (2) connectées en parallèle avec les interrupteurs (1), et l'autre est relié à un noeud (7) reliant la bobine (Ls) à la phase continue d'entrée (Udc) du système de conversion.

5. Système de conversion d'énergie électrique selon l'une quelconque des revendications précédentes, **caractérisé en ce que** la barre conductrice (10) comporte deux bornes (18, 19) réalisées aux deux extrémités de la partie barre conductrice (10) en forme de bobine, pour le raccordement à la branche de commutation (A) et au circuit de modulation (11).

6. Système de conversion d'énergie électrique selon l'une quelconque des revendications précédentes, **caractérisé en ce que** le système de conversion est bidirectionnel, permettant la conversion d'une énergie électrique alternative en énergie électrique continue.

7. Système moteur comprenant des moyens de stockage d'énergie électrique et une machine électrique à courant alternatif, **caractérisé en ce qu'**il comprend un système de conversion d'énergie électrique selon l'une quelconque des revendications précédentes 1 à 6, pour convertir l'énergie électrique continue desdits moyens de stockage énergie électrique, en énergie électrique à courant alternatif pour ladite machine électrique.
